# EUROPEAN PATENT APPLICATION

(11) **EP 4 091 470 A1**
(43) Date of publication of application: **23.11.2022**
(21) Application number: 21741168.5
(22) Date of filing: 15.01.2021
(51) Int. Cl.: A24F 40/40, A24F 40/90, H02J 7/00

(54) **CHARGING DEVICE AND AEROSOL GENERATING DEVICE KIT WITH SAME**

(30) Priority: 17.01.2020 CN 202020116642 U
(71) Applicant: Changzhou Patent Electronic Technology Co., Ltd, Changzhou, Jiangsu 213125 (CN)
(72) Inventor: QIU, Weihua, hangzhou, Jiangsu 213125 (CN); WANG, Chang'an, hangzhou, Jiangsu 213125 (CN)
(74) Representative: Zaboliene, Reda
(86) International application number: PCT/CN2021/072177
(87) International publication number: WO 2021/143852

(57) **Abstract**

Disclosed is a charging device (10) used for charging an aerosol generating device (20). The charging device (10) comprises a charging shell (11) and a battery cell assembly (12) accommodated in the charging shell (11), wherein the charging shell (11) comprises a first shell (111) and a second shell (112) connected to the first shell (111) in a cooperation manner, an accommodating cavity (114) which is at least provided with an opening in a side surface is provided between the first shell (111) and the second shell (112), and the aerosol generating device (20) is installed in the charging shell (11) by means of the accommodating cavity (114) and can be electrically connected to the battery cell assembly (12). According to the charging device (10), the first shell (111) and the second shell (112) are arranged on the charging shell (11), the accommodating cavity (114) at least provided with the opening on the side surface is provided between the first shell (111) and the second shell (112), the accommodating cavity (114) cooperates with the aerosol generating device (20), and during charging, the aerosol generating device (20) is conveniently placed in the charging shell (11) for charging via the accommodating cavity (114), such that the volume of an aerosol generating device kit (100) is not too large, and carrying is convenient. Further provided is an aerosol generating device kit (100) with the charging device (10).

## Description

### TECHNICAL FIELD

The present disclosure relates to the technical field of simulated smoking, in particular to a charging device and an aerosol generating kit with the charging device.

### BACKGROUND

An aerosol generating device is an electronic product that simulates a cigarette. It has the same appearance, smoke, taste and feeling as cigarettes. It is a product that allows users to smoke by atomizing the e-liquid in the aerosol generating device to generate smoke. Due to the portability, safety and environmental protection of the aerosol generating device, the aerosol generating device is favored by many smokers.

The aerosol generating device includes a cartridge and a battery assembly that are connected to each other, the battery assembly is used to power the cartridge so that the cartridge atomizes the e-liquid to generate smoke. When the battery assembly is depleted, the aerosol generating device needs to be inserted into a charging device in order to power the battery assembly. However, the aerosol generating devices in the prior art are all inserted into the charging device from top to bottom for charging. In order to facilitate the plugging and unplugging of the aerosol generating device from the charging device, the aerosol generating device is often partially exposed outside the charging device, resulting in a large volume of the aerosol generating kit and inconvenience to carry.

### SUMMARY

Based on this, it is necessary to provide a charging device which is convenient to carry and an aerosol generating kit with the charging device.

The technical solution adopted by the present disclosure to solve its technical problem is: a charging device for charging an aerosol generating device is provided, the charging device includes a charging housing and a battery unit received in the charging housing, the charging housing includes a first casing and a second casing connected to the first casing, wherein a receiving cavity with an opening at least on a lateral side thereof is provided between the first casing and the second casing, the aerosol generating device is installed in the charging housing through the receiving cavity to be electrically connected with the battery unit.

Further, a first connecting member is provided in the receiving cavity, the first connecting member is electrically connected to the battery unit, the aerosol generating device is provided with a second connecting member; when the aerosol generating device is installed in the charging housing, the first connecting member is electrically connected to the second connecting member.

Further, both the first connecting member and the second connecting member are magnetic members.

Further, the first casing is provided with a partition plate, when the first casing and the second casing are connected to each other, a space between the first casing and the second casing at one side of the partition plate forms an accommodating cavity, the battery unit and the first connecting member are received in the accommodating cavity; the receiving cavity is formed by a space between the first casing and the second casing at the other side of the partition plate.

Further, the partition plate is partially removed to form a reception groove, the first connecting member received in the accommodating cavity passes through the reception groove and extends into the receiving cavity.

An aerosol generating kit includes the charging device mentioned above.

Further, the aerosol generating device includes a cartridge and a battery assembly, the battery assembly includes a battery housing and a bracket received in the battery housing, the aerosol generating device is provided with a second connecting member, the second connecting member is mounted on the bracket.

Further, one side of the battery housing is provided with a communication hole, one side of the second connecting member passes through the communication hole and extends to the outside the battery housing.

Further, the bracket is provided with an accommodating groove, the battery assembly further includes a battery cell and a control board both received in the accommodating groove, the battery cell is electrically connected to the control board, the second connecting member is electrically connected to the control board.

Further, the battery housing includes a battery casing and a battery tail cover, an upper end of the battery casing is sleeved on the outside of the cartridge, a lower end of the battery casing is detachably connected to the battery tail cover.

The beneficial effects of the present disclosure are: in the charging device and the aerosol generating kit provided by the present disclosure, by arranging the first casing and the second casing on the charging casing to cooperate with each other, a receiving cavity with an opening at least on a lateral side thereof is provided between the first casing and the second casing. The receiving cavity matches with the aerosol generating device. During charging, the aerosol generating device can be conveniently placed in the charging housing through the receiving cavity for being charged, which will not cause the volume of the aerosol generating kit to be too large and is convenient to carry.

### BRIEF DESCRIPTION OF THE DRAWINGS

The following describes the present disclosure further with reference to the drawings and embodiments.
FIG. 1 is a structural diagram of the aerosol generating kit of the present disclosure;
FIG. 2 is an exploded view of the aerosol generating kit shown in FIG. 1;
FIG. 3 is an exploded view of the charging device in the aerosol generating kit shown in FIG. 2;
FIG. 4 is an exploded view of the aerosol generating device in the aerosol generating kit shown in FIG. 2;
FIG. 5 is a cross-sectional view of the aerosol generating kit shown in FIG. 1.

The part names and reference signs thereof in the drawings are as follows:

| | | |
|---|---|---|
| aerosol generating kit 100 | charging device 10 | aerosol generating device 20 |
| charging housing 11 | battery unit 12 | first connecting member 13 |
| first casing 111 | second casing 112 | partition plate 1111 |
| accommodating cavity 113 | receiving cavity 114 | reception groove 1113 |
| battery 121 | circuit board 122 | charging port 1221 |
| cartridge 21 | battery assembly 22 | battery housing 221 |
| bracket 222 | battery cell 223 | control board 224 |
| second connecting member 225 | battery casing 2211 | battery tail cover 2212 |
| communication hole 2213 | accommodating groove 2221 | receiving groove 2222 |
| | | |

### DETAILED DESCRIPTION OF PREFERRED EMBODIMENTS

The present disclosure will now be described in detail with reference to the drawings. These drawings are simplified schematic diagrams, which only illustrate the basic structure of the present disclosure in a schematic manner, and only show the structure related to the present disclosure.

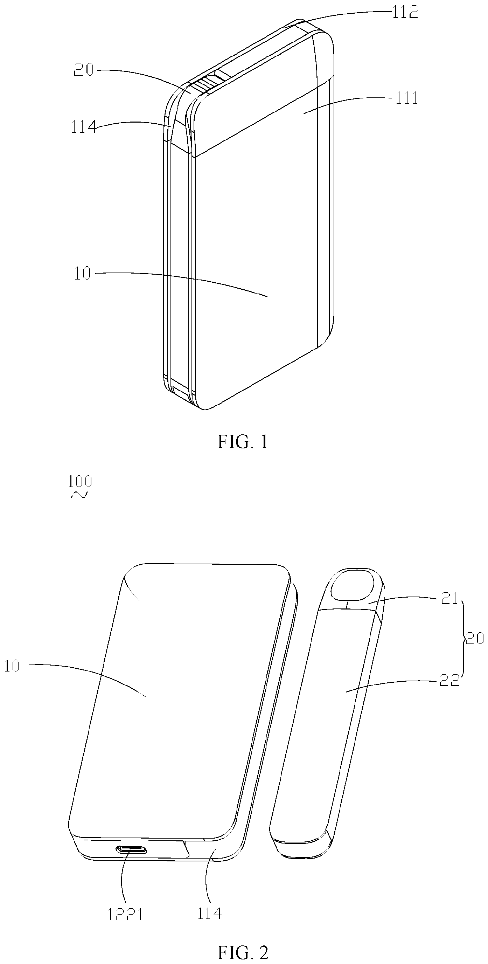

As shown in FIG. 1, the present disclosure provides an aerosol generating kit 100. The aerosol generating kit 100 includes a charging device 10 and an aerosol generating device 20 detachably installed in the charging device 10.

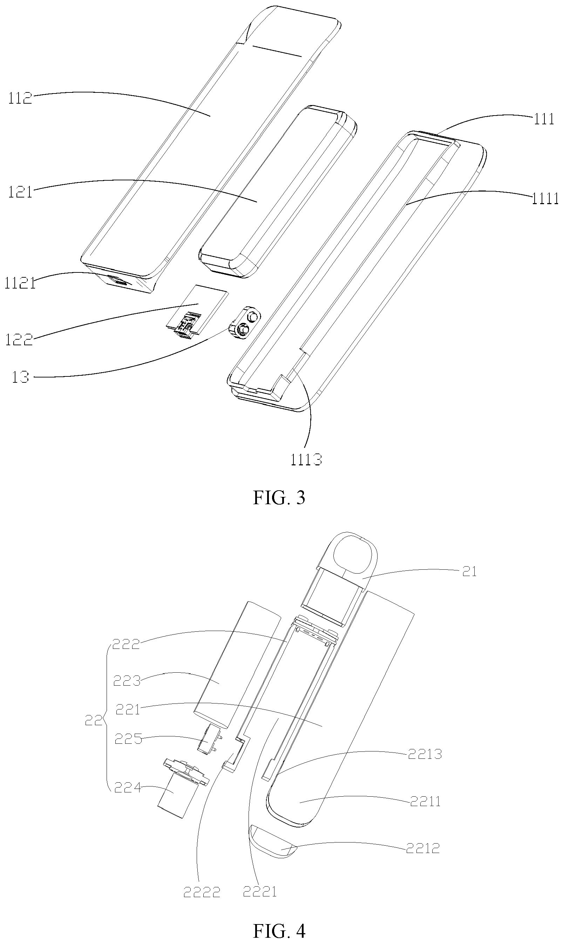

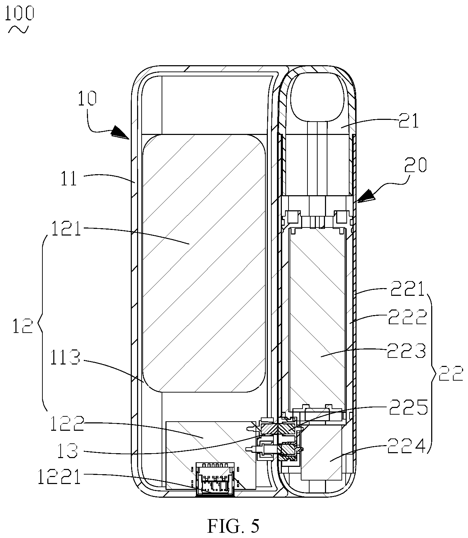

As shown in FIG. 2, FIG. 3 and FIG. 5, the charging device 10 includes a charging housing 11, a battery unit 12 received in the charging housing 11, and a first connecting member 13 disposed in the charging housing 11.

The charging housing 11 includes a first casing 111 and a second casing 112 connected to the first casing 111. An accommodating cavity 113 and a receiving cavity 114 are formed between the first casing 111 and the second casing 112. The battery unit 12 and the first connecting member 13 are received in the accommodating cavity 113. The receiving cavity 114 matches with the aerosol generating device 20. Specifically, the first casing 111 is provided with a partition plate 1111. The first casing 111 and the second casing 112 are connected to each other. The accommodating cavity 113 is formed by a space between the first casing 111 and the second casing 112 at one side of the partition plate 1111. The receiving cavity 114 is formed by a space between the first casing 111 and the second casing 112 at the other side of the partition plate 1111. The upper end, the lower end and the lateral side of the receiving cavity 114 are provided with openings. The aerosol generating device 20 can be installed in the receiving cavity 114 from the upper end, the lower end or the lateral side of the receiving cavity 114. It can be understood that, in other embodiments not shown, the receiving cavity 114 only needs to be opened on the lateral side. In this embodiment, the upper end and the lower end of the receiving cavity 114 refer to the upper end and the lower end of the charging device 10 along the long axis direction when the charging device 10 is in normal use. The lateral side of the receiving cavity 114 refers to one side of the charging device 10 perpendicular to the long axis direction when the charging device 10 is in normal use. It can be understood that, in other embodiments not shown, the first casing 111 and the second casing 112 can also be connected by snapping connection or fastened by screws, bolts, etc. The charging device 10 can also be in other shapes such as a cube or a cylinder, thus, the upper end and the lower end of the receiving cavity 114 refer to two opposite ends of the charging device 10, and the lateral side of the receiving cavity 114 refers to one side of the charging device 10 located between the two opposite ends.

The battery unit 12 includes a battery 121 and a circuit board 122, the battery 121 is electrically connected to the circuit board 122, the circuit board 122 is provided with a charging port 1221. For example, the charging port 1221 can be a USB interface. When the charging device 10 needs to be charged, the battery 121 is charged by an external power source through the charging port 1221.

In one embodiment, the partition plate 1111 is partially removed to form a reception groove 1113, one end of the first connecting member 13 is disposed in the accommodating cavity 113, the other end of the first connecting member 13 passes through the reception groove 1113 and extends into the receiving cavity 114. The first connecting member 13 is electrically connected to the circuit board 122.

As shown in FIG. 1, FIG. 4 and FIG. 5, the aerosol generating device 20 includes a cartridge 21 and a battery assembly 22 connected to each other, e-liquid is stored in the cartridge 21, the cartridge 21 is electrically connected to the battery assembly 22. When the aerosol generating device 20 is activated, the cartridge 21 heats the e-liquid under the electric driving of the battery assembly 22 to generate smoke for the user to inhales.

In this embodiment, the cartridge 21 is inserted into the battery assembly 22. It can be understood that, in other embodiments not shown, the cartridge 21 and the battery assembly 22 can also be connected in a detachable manner such as snapping connection, screwing connection or magnetic connection.

The battery assembly 22 includes a battery housing 221, a bracket 222 received in the battery housing 221, and a battery cell 223, a control board 224 and a second connecting member 225 mounted on the bracket 222.

The battery housing 221 includes a battery casing 2211 and a battery tail cover 2212. The upper end of the battery casing 2211 is sleeved on the outside of the cartridge 21, the lower end of the battery casing 2211 is detachably connected to the battery tail cover 2212. One side of the battery casing 2211 is provided with a communication hole 2213. In this embodiment, the battery tail cover 2212 is inserted on the battery casing 2211. It can be understood that, in other unshown embodiments, the battery casing 2211 and the battery tail cover 2212 can also be connected in a detachable manner such as snapping connection, screwing connection, etc. The existence of the battery tail cover 2212 is convenient for the user to disassemble the aerosol generating device 20 so as to perform maintenance to the inside of the aerosol generating device 20.

The bracket 222 is provided with an accommodating groove 2221, both the battery cell 223 and the control board 224 are received in the accommodating groove 2221. The battery cell 223 is electrically connected to the control board 224. One side of the bracket 222 is recessed to form a receiving groove 2222, the second connecting member 225 is received in the receiving groove 2222, and the second connecting member 225 is electrically connected with the control board 224. One side of the second connecting member 225 passes through the communication hole 2213 and extends to the outside of the battery housing 221.

When charging the aerosol generating device 20, the aerosol generating device 20 is placed in the receiving cavity 114 from the upper end, the lower end or the lateral side of the charging device 10. The first connecting member 13 and the second connecting member 225 are in contact with each other and are electrically connected so as to charge the aerosol generating device 20. After charging the aerosol generating device 20, the aerosol generating device 20 is taken out from the receiving cavity 114. In this embodiment, the first connecting member 13 and the second connecting member 225 are both magnetic members. When the aerosol generating device 20 is installed in the receiving cavity 114, the first connecting member 13 and the second connecting member 225 come into contact under the magnetic attraction between them, and at this time, the power energy in the battery 121 of the charging device 10 is supplied to the battery cell 223 sequentially through the circuit board 122, the first connecting member 13, the second connecting member 225 and the control board 224, thereby realizing the charging function to the aerosol generating device 20. Due to the magnetic attraction between the first connecting member 13 and the second connecting member 225, the connection between the aerosol generating device 20 and the charging device 10 is firm, and the charging stability between the aerosol generating device 20 and the charging device 10 is enhanced. It can be understood that, in other embodiments not shown, the first connecting member 13 and the second connecting member 225 can also be connected in a detachable manner such as snapping connection or plugging connection.

In the charging device 10 provided by the present disclosure, by arranging the first casing 111 and the second casing 112 on the charging casing 11 to cooperate with each other, a receiving cavity 114 with an opening at least on a lateral side thereof is provided between the first casing 111 and the second casing 112. The receiving cavity 114 matches with the aerosol generating device 20. During charging, the aerosol generating device 20 can be conveniently placed in the charging housing 11 through the receiving cavity 114 for being charged, which will not cause the volume of the aerosol generating kit 100 to be too large and is convenient to carry.

Since the aerosol generating kit 100 provided by the present disclosure has all the technical features of the above-mentioned charging device 10, it has the same technical effects as the above.

Taking the above-mentioned ideal embodiments according to the present disclosure as enlightenment, through the above description, the relevant persons can make various changes and modifications without departing from the concept of the present disclosure. The technical scope of the present disclosure is not limited to the content of the specification, and its technical scope should be determined according to the scope of the claims.

## Claims

1. A charging device for charging an aerosol generating device, the charging device comprising a charging housing and a battery unit received in the charging housing, the charging housing comprising a first casing and a second casing connected to the first casing, wherein a receiving cavity with an opening at least on a lateral side thereof is provided between the first casing and the second casing, the aerosol generating device is installed in the charging housing through the receiving cavity to be electrically connected with the battery unit.

2. The charging device according to claim **1,** wherein a first connecting member is provided in the receiving cavity, the first connecting member is electrically connected to the battery unit, the aerosol generating device is provided with a second connecting member; when the aerosol generating device is installed in the charging housing, the first connecting member is electrically connected to the second connecting member.

3. The charging device according to claim **2,** wherein both the first connecting member and the second connecting member are magnetic members.

4. The charging device according to claim **2,** wherein the first casing is provided with a partition plate, when the first casing and the second casing are connected to each other, a space between the first casing and the second casing at one side of the partition plate forms an accommodating cavity, the battery unit and the first connecting member are received in the accommodating cavity; the receiving cavity is formed by a space between the first casing and the second casing at the other side of the partition plate.

5. The charging device according to claim **4,** wherein the partition plate is partially removed to form a reception groove, the first connecting member received in the accommodating cavity passes through the reception groove and extends into the receiving cavity.

6. An aerosol generating kit comprising the charging device according to any of claims **1** to **5.**

7. The aerosol generating kit according to claim **6,** wherein the aerosol generating device includes a cartridge and a battery assembly, the battery assembly includes a battery housing and a bracket received in the battery housing, the aerosol generating device is provided with a second connecting member, the second connecting member is mounted on the bracket.

8. The aerosol generating kit according to claim **7,** wherein one side of the battery housing is provided with a communication hole, one side of the second connecting member passes through the communication hole and extends to the outside the battery housing.

9. The aerosol generating kit according to claim **7,** wherein the bracket is provided with an accommodating groove, the battery assembly further includes a battery cell and a control board both received in the accommodating groove, the battery cell is electrically connected to the control board, the second connecting member is electrically connected to the control board.

10. The aerosol generating kit according to claim **7,** wherein the battery housing includes a battery casing and a battery tail cover, an upper end of the battery casing is sleeved on the outside of the cartridge, a lower end of the battery casing is detachably connected to the battery tail cover.
